# EUROPÄISCHE PATENTANMELDUNG

(11) **EP 2 838 185 A1**
(43) Veröffentlichungstag der Anmeldung: **18.02.2015**
(21) Anmeldenummer: 13180682.0
(22) Anmeldetag: 16.08.2013
(51) Int. Cl.: H02K 16/00, B23Q 11/00, H02K 5/24

(54) **Dämpfung radialer Schwingungen einer Welle einer elektrischen Maschine**

(71) Anmelder: Siemens Aktiengesellschaft, 80333 München (DE); Siemens Industry, Inc., Alpharetta, GA 30005-4437 (US)
(72) Erfinder: Singhal, Sumit, 10719 Berlin (DE); Köhler, Bert-Uwe, 14612 Falkensee (DE); Lang, Matthias, 13158 Berlin (DE)
(74) Vertreter: Maier, Daniel Oliver

(57) **Zusammenfassung**

Die Erfindung betrifft eine elektrische Maschine aufweisend einen Ständer (1) und einen koaxial zum Ständer (1) angeordneten Läufer (2) mit einer Läufergewichtskraft, eine Welle (3), welche drehfest mit dem Läufer (2) verbunden ist und drehbar mittels einer Anzahl n von Lagern (4) gelagert ist, wobei n zumindest zwei ist und zumindest eines der zumindest zwei Lager (4) ein Gleitlager ist, und zumindest einen Sensor (5) mittels welchem eine Schwingung der Welle (3) in radialer Richtung erfassbar ist. Weiterhin betrifft die Erfindung ein System mit einer derartigen elektrischen Maschine und ein Verfahren zum Betrieb einer derartigen elektrischen Maschine und/oder eines derartigen Systems. Um die Dämpfung einer im Betrieb radial schwingenden Welle (3) einer elektrischen Maschine kostengünstiger und zuverlässiger zu gestalten, wird vorgeschlagen, dass die elektrische Maschine zumindest eine Dämpfungseinheit (6) aufweist, mittels welcher auf die Welle (3) in radialer Richtung maximal eine Dämpfungskraft ausübbar ist, welche betragsmäßig kleiner ist als die Läufergewichtskraft geteilt durch die Anzahl n, wobei die zumindest eine Dämpfungseinheit (6) einen drehfest mit der Welle (3) verbundenen Rotor (7) mit einem Rotorblechpaket sowie einen Stator (8) mit elektrischen Statorwicklungen (9) aufweist, wobei das Rotorblechpaket und die Statorwicklungen (9) derart angeordnet sind und die Statorwicklungen (9) derart mit elektrischem Strom beaufschlagbar sind, dass die vom zumindest einen Sensor (5) erfasste Schwingung der Welle (3) dämpfbar ist.

## Beschreibung

Die Erfindung betrifft eine elektrische Maschine aufweisend einen Ständer und einen koaxial zum Ständer angeordneten Läufer mit einer Läufergewichtskraft, eine Welle, welche drehfest mit dem Läufer verbunden ist und drehbar mittels einer Anzahl n von Lagern gelagert ist, wobei n zumindest zwei ist und zumindest eines der zumindest zwei Lager ein Gleitlager ist, und zumindest einen Sensor mittels welchem eine Schwingung der Welle in radialer Richtung erfassbar ist. Weiterhin betrifft die Erfindung ein System mit einer derartigen elektrischen Maschine und ein Verfahren zum Betrieb einer derartigen elektrischen Maschine und/oder eines derartigen Systems.

Eine derartige elektrische Maschine und bzw. ein derartiges Verfahren kommen beispielsweise im Umfeld von Antriebssträngen mit einem variablen Drehzahlbereich zum Einsatz. Dabei kann es vorkommen, dass Eigenfrequenzen zu durchfahren sind bzw. der Antriebsstrang sogar innerhalb einer Eigenfrequenz betrieben werden muss. Um die Schwingungsamplituden nicht zu groß werden zu lassen, muss genügend Dämpfung in das System gebracht werden. Tendenziell sind dabei die Schwingungen in radialer Richtung stärker ausgeprägt als die Schwingungen in axialer Richtung oder in Umfangsrichtung, so dass eine Dämpfung in radialer Richtung besonders wichtig ist. Weiterhin können Instabilitäten z.B. durch innere Dämpfung, Ölfilminstabilitäten oder ähnlichem auftreten. Auch in diesen Fällen ist eine ausreichend große zusätzliche äußere Dämpfung zur Stabilisierung notwendig.

Der bisher übliche Lösungsansatz besteht darin, über die Gleitlager der elektrischen Maschine genügend Dämpfung bereitzustellen. Weiterhin können Quetschöldämpfer eingesetzt werden. Die damit erreichbaren Dämpfungswerte sind jedoch relativ gering. Weiterhin existiert für Gleitlager bei hohen Drehzahlen eine Stabilitätsgrenze, die den Einsatzbereich beschränkt. Aufgrund der schwierigen Berechenbarkeit und Temperaturabhängigkeit ist der Erfolg des Einsatzes eines Quetschöldämpfers schwer vorhersagbar. Bei einem flexiblen Maschinenfundament können Quetschöldämpfer nicht eingesetzt werden.

Aus der DE 10 2006 026 123 B3 ist ein Quetschöldämpfer zum Dämpfen von radialen Bewegungen eines um eine Rotorachse rotierenden Rotors bekannt, wobei ein viskoses Medium in einem Ringspalt um die Rotorachse herum angeordnet ist. Die Anordnung weist einen Sensor zur Erfassung des aktuellen Betriebszustands des Rotors auf, wobei das Medium in Abhängigkeit des Betriebszustands in unterschiedlichen Bereichen um die Rotorachse mit unterschiedlichen Drücken beaufschlagt wird, um den Rotor aktiv zu dämpfen.

Der Erfindung liegt die Aufgabe zugrunde, die Dämpfung einer im Betrieb radial schwingenden Welle einer elektrischen Maschine kostengünstiger und zuverlässiger zu gestalten.

Diese Aufgabe wird durch eine elektrische Maschine der eingangs genannten Art dadurch gelöst, dass die elektrische Maschine zumindest eine Dämpfungseinheit aufweist, mittels welcher auf die Welle in radialer Richtung maximal eine Dämpfungskraft ausübbar ist, welche betragsmäßig kleiner ist als die Läufergewichtskraft geteilt durch die Anzahl n, wobei die zumindest eine Dämpfungseinheit einen drehfest mit der Welle verbundenen Rotor mit einem Rotorblechpaket sowie einen Stator mit elektrischen Statorwicklungen aufweist, wobei das Rotorblechpaket und die Statorwicklungen derart angeordnet sind und die Statorwicklungen derart mit elektrischem Strom beaufschlagbar sind, dass die vom zumindest einen Sensor erfasste Schwingung der Welle dämpfbar ist.

Weiterhin wird diese Aufgabe durch ein System gelöst, welches eine derartige elektrische Maschine, einen Umrichter, mittels welchem die Statorwicklungen der zumindest einen Dämpfungseinheit mit elektrischem Strom beaufschlagbar sind, und eine Steuerungseinheit umfasst, welche mit dem zumindest einen Sensor verbindbar ist und mittels welcher der Umrichter derart ansteuerbar ist, dass die Statorwicklungen der zumindest einen Dämpfungseinheit derart vom Umrichter mit elektrischem Strom beaufschlagbar sind, dass die vom zumindest einen Sensor erfasste Schwingung der Welle dämpfbar ist.

Schließlich wird diese Aufgabe durch ein Verfahren zum Betrieb einer derartigen elektrischen Maschine und/oder eines derartigen Systems mit den folgenden Verfahrensschritten gelöst:
- Erfassen einer Schwingung der Welle mittels des zumindest einen Sensors,
- Beaufschlagen der Statorwicklungen mit einem derartigen elektrischem Strom, dass die vom zumindest einen Sensor erfasste Schwingung der Welle gedämpft wird.

Die Welle der elektrischen Maschine ist mittels zumindest zwei Lagern drehbar gelagert, wobei zumindest eines der Lager als Gleitlager ausgeführt ist. Anstelle des zumindest einen Gleitlagers sind auch andere Arten von berührungsbehafteten Lagern denkbar, wie zum Beispiel Wälzlager. Insbesondere können dabei alle Lager der elektrischen Maschine als berührungsbehaftete Lager ausgeführt sein.

Zur Erfassung der während des Betriebs der elektrischen Maschine auftretenden radialen Schwingung der Welle ist zumindest ein Sensor vorgesehen, welcher beispielsweise die Position der Welle bzw. deren Auslenkung aus der Normallage erfasst. Die ermittelte radiale Schwingung der Welle ist durch die zumindest eine Dämpfungseinheit dämpfbar, indem die Dämpfungseinheit eine radiale Dämpfungskraft auf die Welle ausübt.

Üblicherweise sind die für die Dämpfung der radialen Schwingung erforderlichen Kräfte wesentlich geringer als die Läufergewichtskraft. Unter der Läufergewichtskraft wird dabei die Summe jener Gewichtskräfte verstanden, welche insgesamt mittels der Lager zu lagern sind. Somit umfasst die Läufergewichtskraft die Gewichtskraft des Läufers und gegebenenfalls die Gewichtskraft der Welle. Um lediglich die Dämpfung der radialen Schwingung zu bewerkstelligen, ist die durch die zumindest eine Dämpfungseinheit maximal ausübbare radiale Dämpfungskraft folglich kleiner als die Läufergewichtskraft geteilt durch die Anzahl n der Lager der Welle. Die zumindest eine Dämpfungseinheit ist somit derart ausgelegt, dass sie zum Lagern der Welle ungeeignet ist und lediglich der Dämpfung der radialen Schwingung der Welle dient.

Diese Auslegung der zumindest einen Dämpfungseinheit erlaubt eine vergleichsweise kleine und kompakte Ausführung der zumindest einen Dämpfungseinheit, wodurch zum einen Kosten gespart werden können und zum anderen vergleichsweise wenig axialer und radialer Bauraum benötigt werden. Hinzu kommt, dass die zumindest eine Dämpfungseinheit nicht verschleißbehaftet ist und somit dauerhaft betrieben werden kann.

Um die entsprechende radiale Dämpfungskraft aufbringen zu können, verfügt die zumindest eine Dämpfungseinheit über einen Rotor mit einem Rotorblechpaket sowie einen Stator mit Statorwicklungen, welche insbesondere durch den Umrichter mit einem derartigen elektrischem Strom beaufschlagbar sind, dass die zumindest eine Dämpfungseinheit eine radiale Dämpfungskraft auf die Welle ausüben kann und somit die erfasste Schwingung der Welle dämpfbar ist.

Insbesondere kann der Stator die Welle in jenem axialen Bereich zumindest teilweise in Umfangsrichtung umschließen, in welchem der Rotor der zumindest einen Dämpfungseinheit angeordnet ist.

Vorzugsweise ist die elektrische Maschine mit einer Leistung von mindestens 1 MW, insbesondere von mindestens 10 MW, betreibbar. Dabei kann die elektrische Maschine als Elektromotor, beispielsweise für einen Kompressorantrieb, Mühlenantrieb oder dergleichen, oder als Generator, beispielsweise als Windkraftgenerator, ausgeführt sein. Entsprechend kann die Arbeitsmaschine als Kompressor, Mühle oder dergleichen, aber auch als Getriebe oder Windrad ausgeführt sein.

Bei einer weiteren vorteilhaften Ausgestaltung der Erfindung weist die Dämpfungskraft in eine Richtung, welche im Wesentlichen antiparallel zur Richtung einer im Betrieb der Welle vollzogenen Auslenkung der Welle ist.

Die Drehzahl der Welle kann sich im Betrieb durchaus ändern, beispielsweise wenn die elektrische Maschine hochgefahren oder heruntergefahren wird. Entsprechend kann sich auch die Frequenz bzw. Amplitude der jeweiligen Schwingung ändern, insbesondere da die Welle einer Schwingung mit einer Eigenfrequenz oder einer Vielfachen der Eigenfrequenzen unterworfen ist.

Während des Betriebs der elektrischen Maschine können Schwingungen in Form von radialen Auslenkungen eines axialen Bereichs der Welle auftreten, wobei sich die Auslenkung auf eine Normallage des jeweiligen axialen Bereichs der Welle bezieht. Da die Welle im Betrieb mit einer bestimmten, insbesondere veränderlichen Drehzahl rotiert, rotiert auch die entsprechende radiale Auslenkung mit derselben Drehzahl. Entsprechend wird die Dämpfungskraft derart aufgebracht, dass sie jeweils im Wesentlichen entgegen der momentanen Richtung der Auslenkungsgeschwindigkeit gerichtet ist und wirkt. Dies wird dadurch erreicht, dass auch die Dämpfungskraft mit derselben momentanen Drehzahl wie die Welle rotiert und dabei stets im Wesentlichen entgegen der Richtung der Auslenkungsgeschwindigkeit gerichtet ist. Hierzu werden die Statorwicklungen entsprechend mit Strom beaufschlagt, insbesondere derart, dass ein magnetisches Drehfeld mit derselben momentanen Drehzahl erzeugt wird.

Insbesondere kann die Drehzahl der Welle bekannt sein, da beispielsweise bei einem Elektromotor der Ständer der elektrischen Maschine entsprechend mit elektrischem Strom beaufschlagt wird. Die bekannte Drehzahl kann somit der Steuerungseinheit, welche den mit den Statorwicklungen verbundenen Umrichter ansteuert, zugeführt werden, so dass der zumindest eine Sensor lediglich die Phasenlage und gegebenenfalls die Amplitude der Auslenkung bzw. Schwingung detektieren muss. Denkbar ist jedoch auch, dass die zumindest eine Dämpfungseinheit lediglich auf Grundlage von durch den zumindest einen Sensor ermittelten Daten betrieben wird. Somit wird sowohl die Richtung als auch der Betrag der Dämpfungskraft an die durch den zumindest einen Sensor ermittelte Schwingung bzw. Auslenkung der Welle angepasst.

Während des Betriebs der elektrischen Maschine mit einer konstanten Drehzahl kann allerdings auch vorgesehen sein, dass die Dämpfungskraft mit der Drehzahl der Welle rotiert und die Dämpfungskraft einen im Wesentlichen konstanten Betrag aufweist. Dies ist insbesondere dann möglich, wenn die Frequenz und die Amplitude der Schwingung der Welle als bekannt vorausgesetzt werden können.

Bei einer weiteren vorteilhaften Ausgestaltung der Erfindung ist die Welle im Betrieb einer Eigenschwingung mit einer Wellenlänge λ unterworfen, wobei der zumindest eine Sensor und/oder die zumindest eine Dämpfungseinheit jeweils innerhalb eines Bereichs von ± λ/6 um die axiale Position eines Schwingungsbauchs der Eigenschwingung angeordnet ist.

Dabei kann die Eigenschwingung die Grundschwingung oder eine Oberschwingung der Welle sein, wobei ein axialer Abschnitt der Welle eine Schwingung in radialer Richtung vollzieht und die Amplitude abhängig von der axialen Position des Wellenabschnitts ist. Für das Beispiel einer an ihren beiden axialen Enden gelagerten Welle ist die Wellenlänge λ der Grundschwingung gleich der doppelten axialen Länge der Welle, wobei Oberschwingungen mit entsprechend kürzeren Wellenlängen auftreten können. Insbesondere kann die genannte Eigenschwingung mit der Wellenlänge λ in der Nachbarschaft der normalen Betriebsdrehzahl der Welle auftreten.

Durch die Anordnung des zumindest einen Sensors im Bereich von ± λ/6 um die axiale Position eines Schwingungsbauchs wird sichergestellt, dass der jeweilige Sensor nicht an einem Wellenknoten oder in der Nähe eines Wellenknotens angeordnet ist, wo die Amplitude der jeweiligen Schwingung null oder sehr klein ist. Vielmehr wird dadurch erreicht, dass die an der axialen Position des jeweiligen Sensors messbare Amplitude zumindest 50 % der am Schwingungsbauch auftretenden Amplitude erreicht. Somit wird eine aussagekräftige Messung der radialen Schwingung der Welle ermöglicht. Wird die zumindest eine Dämpfungseinheit an einer entsprechenden Position angeordnet, so ist eine ausreichend wirkungsvolle Dämpfung der radialen Schwingung der Welle möglich.

Um eine besonders sensible Dämpfung der Schwingung bei vergleichsweise kleinen Amplituden zu erreichen, ist es vorteilhaft, den zumindest einen Sensor und/oder die zumindest eine Dämpfungseinheit innerhalb eines Bereichs von ± 0,05λ um die axiale Position eines Schwingungsbauchs der Eigenschwingung anzuordnen. Bei einer derartigen Anordnung des zumindest einen Sensors können auftretende Schwingungen vergleichsweise früh erfasst werden, da die durch den jeweiligen Sensor erfassbare Auslenkung zumindest 95 % der am Schwingungsbauch auftretenden Amplitude der Schwingung erreicht. Eine entsprechende Anordnung der zumindest einen Dämpfungseinheit erlaubt wiederum eine entsprechend genaue Dämpfung, ohne dabei unerwünschte Nebeneffekte zu erzielen.

Bei einer weiteren vorteilhaften Ausgestaltung der Erfindung ist die Welle im Betrieb dabei einer weiteren Eigenschwingung mit einer Wellenlänge λ' unterworfen, wobei der zumindest eine Sensor und/oder die zumindest eine Dämpfungseinheit jeweils innerhalb eines Bereichs von ± λ'/6 um die axiale Position eines weiteren Schwingungsbauchs der weiteren Eigenschwingung angeordnet ist.

Insbesondere wenn die elektrische Maschine hochgefahren oder heruntergefahren wird, können weitere Eigenschwingungen der Welle durchfahren werden, wobei diese Eigenschwingungen insbesondere die Grundschwingung oder Oberschwingungen niedriger Ordnung in Bezug auf die normale Betriebsdrehzahl der Welle sind. Denkbar ist allerdings auch, dass die elektrische Maschine in Überlast betrieben wird, so dass die Welle mit einer erhöhten Drehzahl rotiert und Eigenschwingungen höherer Ordnung auftreten. Derartige weitere Eigenschwingungen mit der Wellenlänge λ', welche sich von der Wellenlänge λ unterscheidet, weisen entsprechende Schwingungsbäuche auf, welche gegebenenfalls an anderen axialen Positionen lokalisiert sind als bei der Eigenschwingung mit der Wellenlänge λ.

Dadurch das der zumindest eine Sensor und/oder die zumindest eine Dämpfungseinheit jeweils ebenso in einem Bereich von ± λ'/6 um die axiale Position eines weiteren Schwingungsbauchs der weiteren Eigenschwingung angeordnet ist, kann auch die weitere Eigenschwingung zuverlässig erfasst bzw. gedämpft werden.

Abhängig von den Wellenlängen λ und λ' kann es möglich sein, den jeweiligen Sensor und/oder die jeweilige Dämpfungseinheit jeweils zusätzlich innerhalb eines Bereichs von ± 0,05λ' um die axiale Position eines Schwingungsbauchs der Eigenschwingung mit der Wellenlänge λ' anzuordnen. Dies erlaubt eine besonders sensible Erfassung bzw. Dämpfung der jeweiligen Eigenschwingung.

Bei einer weiteren vorteilhaften Ausgestaltung der Erfindung ist dabei zwischen dem zumindest einen Sensor und der zumindest einen Dämpfungseinheit ein Abstand in axialer Richtung von einem Mehrfachen der halben Wellenlänge λ vorgesehen.

Dabei ist das Mehrfache der halben Wellenlänge als Multiplikation der halben Wellenlänge λ mit einer natürlichen Zahl zu verstehen. Dadurch wird gewährleistet, dass der jeweilige Sensor und die jeweilige Dämpfungseinheit jeweils an einem Schwingungsbauch angeordnet sind und somit eine wirkungsvolle Erfassung bzw. Dämpfung der radialen Schwingung der Welle möglich ist. Da der jeweilige Sensor und die jeweilige Dämpfungseinheit jedoch an verschiedenen Schwingungsbäuchen angeordnet sind, wird eine besonders flexible räumliche Gestaltung der elektrischen Maschine ermöglicht. Dies ist insbesondere dann vorteilhaft, wenn lediglich sehr wenig axialer Bauraum zur Verfügung steht und somit in einem axialen Bereich mit einem Schwingungsbauch beispielsweise lediglich die Dämpfungseinheit untergebracht werden kann und an einem anderen axialen Bereich mit einem anderen Schwingungsbauch der Sensor untergebracht wird.

Entsprechend kann zwischen dem jeweiligen Sensor und der jeweiligen Dämpfungseinheit auch ein Abstand von einem Mehrfachen der halben Wellenlänge λ' vorgesehen sein. Weiterhin kann auch zwischen zwei Sensoren bzw. zwischen zwei Dämpfungseinheiten ein derartiger Abstand eingehalten werden.

Insbesondere können der jeweilige Sensor und die jeweilige Dämpfungseinheit den genannten Abstand zueinander aufweisen, wobei zusätzlich die weiter oben erläuterten Bereiche von ± λ/6 bzw. ± 0,05λ bezüglich des jeweiligen Sensors bzw. der jeweiligen Dämpfungseinheit berücksichtigt werden.

Bei einer weiteren vorteilhaften Ausgestaltung der Erfindung ist der zumindest eine Sensor alternativ in jenem axialen Bereich der elektrischen Maschine angeordnet, in welchem die zumindest eine Dämpfungseinheit angeordnet ist.

Insbesondere wenn für die Unterbringung sowohl des zumindest einen Sensors als auch der zumindest einen Dämpfungseinheit im selben axialen Bereich genügend axialer Bauraum zur Verfügung steht, erlaubt eine derartige Anordnung die bauliche Integration des zumindest einen Sensors in die zumindest eine Dämpfungseinheit. Hierdurch wird beispielsweise die Nachrüstung einer bestehenden elektrischen Maschine mit einer derartigen Kombination aus dem Sensor und der Dämpfungseinheit besonders einfach, da lediglich ein axialer Bereich der elektrischen Maschine bearbeitet werden muss. Von Vorteil ist weiterhin, dass die zumindest eine Dämpfungseinheit unmittelbar an jener axialen Position dämpfend auf die Welle einwirkt, an welcher der zumindest eine Sensor die Schwingung der Welle erfasst.

Bei einer weiteren vorteilhaften Ausgestaltung der Erfindung ist der zumindest eine Sensor und/oder die zumindest eine Dämpfungseinheit im axialen Bereich zwischen den zumindest zwei Lagern angeordnet.

Durch eine derartige Anordnung kann eine kompakte Bauform verwirklicht werden, insbesondere da der jeweilige Sensor und/oder die jeweilige Dämpfungseinheit innerhalb eines Gehäuses der elektrischen Maschine angeordnet werden kann. Somit kann der jeweilige Sensor und/oder die jeweilige Dämpfungseinheit mechanisch mit dem Gehäuse der elektrischen Maschine verbunden werden, wodurch auftretende Kräfte zuverlässig an das Gehäuse abgegeben werden können. Gleichzeitig kann eine unbeabsichtigte Beschädigung des jeweiligen Sensors und/oder der jeweiligen Dämpfungseinheit, insbesondere während des Transports oder der Montage der elektrischen Maschine, verhindert werden.

Bei einer weiteren vorteilhaften Ausgestaltung der Erfindung weist der Stator der Dämpfungseinheit einen Innendurchmesser von mindestens 100 mm auf, wobei die elektrische Maschine mit einer derartigen Drehzahl betreibbar ist, dass die Umfangsgeschwindigkeit der Welle im axialen Bereich des Gleitlagers mindestens 80 m/s beträgt.

Das erläuterte Konzept zur Dämpfung einer radialen Schwingung der Welle ist besonders vorteilhaft bei vergleichsweise großen und schnell drehenden Maschinen anwendbar, da dort beispielsweise Quetschöldämpfer nicht mehr einsetzbar sind oder die Gleitlager allein eine zu geringe Dämpfung bewirken können. Zu solchen Maschinen zählen insbesondere solche mit mehr als 1 MW bzw. mehr als 10 MW elektrischer Leistung, und solche, welche eine Umfangsgeschwindigkeit der Welle im axialen Bereich des Gleitlagers von mindestens 80 m/s, insbesondere mehr als 100 m/s, aufweisen. Die Welle einer derartigen Maschine ist entsprechend tragfähig ausgeführt, so dass der Stator der Dämpfungseinheit einen Innendurchmesser von zumindest 100 mm, insbesondere mehr als 200 mm, aufweist.

Bei einer weiteren vorteilhaften Ausgestaltung der Erfindung beträgt die Resultierende der Dämpfungskraft im zeitlichen Mittel betragsmäßig maximal ein Prozent der Läufergewichtskraft.

Die Resultierende der Dämpfungskraft ist dabei als eine Art Netto-Kraft zu verstehen, welche die zumindest eine Dämpfungseinheit auf die Welle ausübt. Dabei kann das zeitliche Mittel beispielsweise in einem gegebenen Zeitintervall betrachtet werden, wie zum Beispiel eine oder mehrere Umdrehungen der Welle, eine Sekunde oder eine Minute. Dadurch, dass die Resultierende im zeitlichen Mittel betragsmäßig maximal ein Prozent der Läufergewichtskraft beträgt, wird deutlich, dass die zumindest eine Dämpfungseinheit keine Tragefunktion bezüglich der Welle erfüllt, sondern ausschließlich der Dämpfung einer radialen Schwingung der Welle dient. Hierzu übt die zumindest eine Dämpfungseinheit eine Dämpfungskraft insbesondere in unterschiedlichen radialen Richtungen auf die Welle aus, so dass sich die zeitlich nacheinander ausgeübten Dämpfungskräfte im zeitlichen Mittel gegenseitig zumindest teilweise aufheben und maximal zu einem Prozent der Läufergewichtskraft aufsummieren.

Bei einer weiteren vorteilhaften Ausgestaltung der Erfindung ist die maximal ausübbare Dämpfungskraft betragsmäßig zumindest eine Größenordnung kleiner als die Läufergewichtskraft. Eine derart ausgelegte Dämpfungseinheit kann besonders kompakt und platzsparend ausgeführt sein und erlaubt dennoch, genügend große Dämpfungskräfte auf die Welle auszuüben.

Bei einer weiteren vorteilhaften Ausgestaltung der Erfindung weist die Steuerungseinheit einen Regelkreis auf, welchem Signale des zumindest einen Sensors als Eingangsgröße zuführbar sind und mittels welchem an den Umrichter übermittelbare Steuerbefehle als Ausgangsgröße berechenbar sind.

Zunächst erfasst der zumindest eine Sensor eine Schwingung der Welle in radialer Richtung und erzeugt entsprechende Sensorsignale. Diese Sensorsignale werden an den Regelkreis der Steuerungseinheit übermittelt. Dabei kann der Regelkreis der Steuerungseinheit beispielsweise einen PD-Regler aufweisen, wobei die Steuerungseinheit ausgehend von den Sensorsignalen Steuerbefehle berechnet, die an den Umrichter übermittelt werden. Derartige Steuerbefehle können beispielsweise als Sollwerte jenes Stromes ausgeführt sein, mit welchem der Umrichter die Statorwicklungen beaufschlagt.

Bei einer weiteren vorteilhaften Ausgestaltung der Erfindung weist das System dabei eine Arbeitsmaschine, welche eine Arbeitswelle mit einer Arbeitswellengewichtskraft aufweist, wobei die Arbeitswelle über eine Kupplung drehfest mit der Welle der elektrischen Maschine verbunden ist und drehbar mittels einer Anzahl n' von Arbeitswellenlagern gelagert ist, zumindest einen weiteren Sensor zur Erfassung einer Schwingung der Arbeitswelle in radialer Richtung und zumindest eine weitere Dämpfungseinheit auf, mittels welcher auf die Arbeitswelle in radialer Richtung maximal eine weitere Dämpfungskraft ausübbar ist, welche betragsmäßig kleiner ist als die Arbeitswellengewichtskraft geteilt durch die Anzahl n', wobei die zumindest eine weitere Dämpfungseinheit einen drehfest mit der Arbeitswelle verbundenen weiteren Rotor mit einem weiteren Rotorblechpaket sowie einen weiteren Stator mit weiteren elektrischen Statorwicklungen aufweist, wobei das weitere Rotorblechpaket und die weiteren Statorwicklungen derart angeordnet sind und die weiteren Statorwicklungen derart mit elektrischem Strom beaufschlagbar sind, dass die vom zumindest einen weiteren Sensor erfasste Schwingung der Arbeitswelle dämpfbar ist.

Die Arbeitsmaschine ist bezüglich der Dämpfung einer Schwingung der Arbeitswelle in radialer Richtung ähnlich ausgerüstet wie die oben erläuterte elektrische Maschine. Somit kann die Schwingung der Arbeitswelle ähnlich zuverlässig gedämpft werden, wobei auch bezüglich der Arbeitsmaschine entsprechende vorteilhafte Ausgestaltungen, wie oben für die elektrische Maschine erläutert, zum Einsatz kommen können. Insbesondere können dabei Schwingungen erfasst und gedämpft werden, welche lediglich im Verbund der elektrischen Maschine mit der Arbeitsmaschine auftreten. Hierzu sind die entsprechenden Sensoren und Dämpfungseinheiten vorteilhafterweise jeweils innerhalb der oben erläuterten Bereiche um die Schwingungsbäuche dieser Schwingungen angeordnet.

Vorteilhafterweise ist zumindest eines der Arbeitswellenlager als berührungsbehaftetes Lager, insbesondere Gleitlager, ausgeführt.

Bei komplexeren Maschinen können dabei mehrere Sensoren bzw. mehrerer weiterer Sensoren und/oder mehrere Dämpfungseinheiten bzw. mehrere weitere Dämpfungseinheiten vorgesehen sein. Derartige Maschinen können dabei auch mehr als zwei Lager aufweisen.

Im Folgenden wird die Erfindung anhand der in den Figuren dargestellten Ausführungsbeispiele näher beschrieben und erläutert. Es zeigen:
- FIG 1: ein Ausführungsbeispiel der erfindungsgemäßen elektrischen Maschine,
- FIG 2: ein erstes Ausführungsbeispiel des erfindungsgemäßen Systems, und
- FIG 3: ein zweites Ausführungsbeispiel des erfindungsgemäßen Systems.

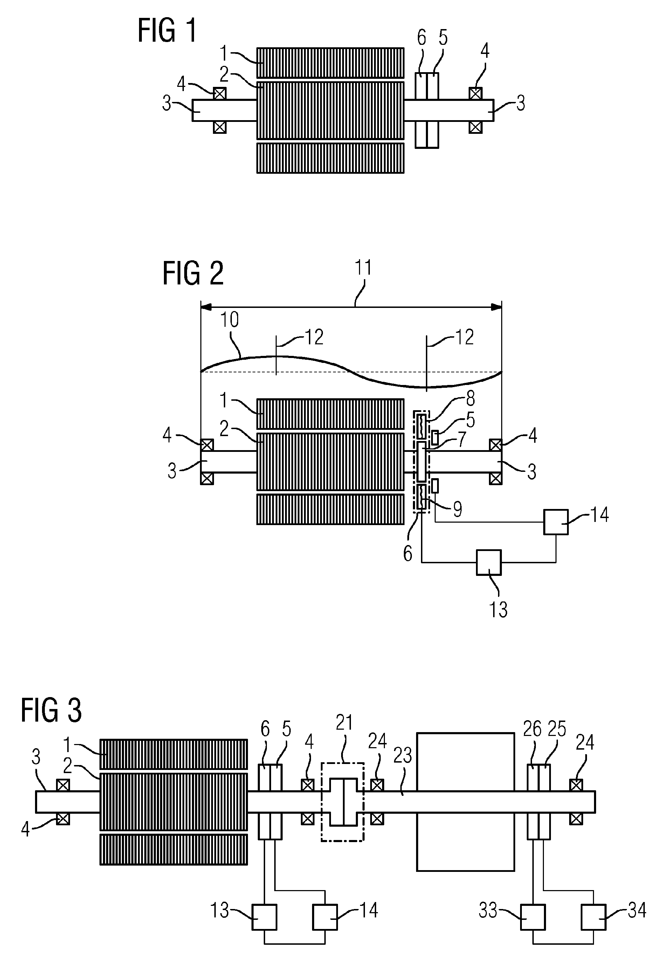

Figur 1 zeigt ein Ausführungsbeispiel der erfindungsgemäßen elektrischen Maschine. Die elektrische Maschine verfügt über eine Welle 3, welche mittels Lagern 4 drehbar gelagert ist. Dabei ist zumindest eines der Lager 4 als Gleitlager ausgeführt. Die Welle 3 ist drehfest mit einem Läufer 2 verbunden, welcher sich innerhalb eines koaxial zum Läufer 2 angeordneten Ständers 1 befindet.

Die elektrische Maschine weist weiterhin einen Sensor 5 und eine Dämpfungseinheit 6 auf, wobei mittels des Sensors 5 eine Schwingung der Welle 3 in radialer Richtung erfassbar ist. Die Dämpfungseinheit 6 weist einen Rotor 7 mit einem Rotorblechpaket sowie einen Stator 8 mit darin befindlichen Statorwicklungen 9 auf, was in Figur 2 näher dargestellt ist.

Zur Dämpfung der Schwingung ist mittels der Dämpfungseinheit 6 maximal eine Dämpfungskraft in radialer Richtung auf die Welle 3 ausübbar, wobei diese maximale Dämpfungskraft betragsmäßig kleiner als die Läufergewichtskraft geteilt durch die Anzahl der Lager 4 ist. Dabei ist die Läufergewichtskraft als Summe aller Gewichtskräfte aufzufassen, welche mittels der Lager 4 zu lagern sind.

Figur 2 zeigt ein erstes Ausführungsbeispiel des erfindungsgemäßen Systems. Da das erste Ausführungsbeispiel des Systems dem oben diskutierten Ausführungsbeispiel der elektrischen Maschine ähnlich ist, werden im Folgenden im Wesentlichen die Unterschiede erläutert.

Die Dämpfungseinheit 6 weist einen Rotor 7 mit einem Rotorblechpaket sowie einen Stator 8 mit darin befindlichen Statorwicklungen 9 auf. Die Statorwicklungen 9 sind mit einem Umrichter 13 und der Sensor 5 mit einer Steuerungseinheit 14 verbunden. Dabei werden Daten des Sensors 5, welcher eine Schwingung der Welle 3 in radialer Richtung erfasst, an die Steuerungseinheit 14 übermittelt, welche daraufhin Steuerbefehle errechnet, welche zur Ansteuerung des Umrichters 14 an diesen übermittelt werden. Diese Steuerbefehle können beispielsweise Stromsollwerte sein. Daraufhin beaufschlagt der Umrichter 14 die Statorwicklungen 9 mit einem derartigen elektrischen Strom, dass die vom Sensor 5 erfasste Schwingung der Welle 3 durch die erzeugte Dämpfungskraft gedämpft wird.

Weiter dargestellt ist in Figur 2 eine mögliche Eigenschwingung 10 der Welle 3, wobei die mit dem Bezugszeichen 11 gekennzeichnete Wellenlänge λ der axialen Länge der Welle 3 entspricht. Da die Eigenschwingung zwei Schwingungsbäuche 12 aufweist, handelt es sich folglich um die erste Oberschwingung der Welle 3. Im axialen Bereich eines der Schwingungsbäuche 12 sind dabei der Sensor 5 und die Dämpfungseinheit 6 angeordnet, was zum einen eine zuverlässige Erfassung der Schwingung der Welle 3 mittels des Sensors 5 und zum anderen eine ebenso zuverlässige Dämpfung der Schwingung mittels der Dämpfungseinheit 6 ermöglicht.

Figur 3 zeigt ein zweites Ausführungsbeispiel des erfindungsgemäßen Systems. Dieses Ausführungsbeispiel unterscheidet sich vom ersten Ausführungsbeispiel des erfindungsgemäßen Systems im Wesentlichen durch eine zusätzlich vorgesehene Arbeitsmaschine, deren Arbeitswelle 23 über eine Kupplung 21 mit der Welle 3 der elektrischen Maschine drehfest verbunden ist. Dabei ist die Arbeitswelle 23 mittels zwei Arbeitswellenlagern 24 drehbar gelagert, von denen vorzugsweise zumindest eines als Gleitlager ausgeführt ist. Weiterhin sind ein weiterer Sensor 25 und eine weitere Dämpfungseinheit 26 zur Erfassung und Dämpfung einer radialen Schwingung der Arbeitswelle 23 vorgesehen. Hierzu ist der weitere Sensor 25 mit einer weiteren Steuerungseinheit 34 verbunden, welche Steuerbefehle auf Grundlage der Daten des weiteren Sensors 25 an einen weiteren Umrichter 33 übermittelt. Der weitere Umrichter 33 beaufschlagt schließlich die weitere Dämpfungseinheit 26 mit einem elektrischen Strom, der dazu geeignet ist, die radiale Schwingung der Arbeitswelle 23 zu dämpfen.

Zusammenfassend betrifft die Erfindung eine elektrische Maschine aufweisend einen Ständer und einen koaxial zum Ständer angeordneten Läufer mit einer Läufergewichtskraft, eine Welle, welche drehfest mit dem Läufer verbunden ist und drehbar mittels einer Anzahl n von Lagern gelagert ist, wobei n zumindest zwei ist und zumindest eines der zumindest zwei Lager ein Gleitlager ist, und zumindest einen Sensor mittels welchem eine Schwingung der Welle in radialer Richtung erfassbar ist. Weiterhin betrifft die Erfindung ein System mit einer derartigen elektrischen Maschine und ein Verfahren zum Betrieb einer derartigen elektrischen Maschine und/oder eines derartigen Systems. Um die Dämpfung einer im Betrieb radial schwingenden Welle einer elektrischen Maschine kostengünstiger und zuverlässiger zu gestalten, wird vorgeschlagen, dass die elektrische Maschine zumindest eine Dämpfungseinheit aufweist, mittels welcher auf die Welle in radialer Richtung maximal eine Dämpfungskraft ausübbar ist, welche betragsmäßig kleiner ist als die Läufergewichtskraft geteilt durch die Anzahl n, wobei die zumindest eine Dämpfungseinheit einen drehfest mit der Welle verbundenen Rotor mit einem Rotorblechpaket sowie einen Stator mit elektrischen Statorwicklungen aufweist, wobei das Rotorblechpaket und die Statorwicklungen derart angeordnet sind und die Statorwicklungen derart mit elektrischem Strom beaufschlagbar sind, dass die vom zumindest einen Sensor erfasste Schwingung der Welle dämpfbar ist.

## Patentansprüche

1. Elektrische Maschine aufweisend
- einen Ständer (1) und einen koaxial zum Ständer (1) angeordneten Läufer (2) mit einer Läufergewichtskraft,
- eine Welle (3), welche drehfest mit dem Läufer (2) verbunden ist und drehbar mittels einer Anzahl n von Lagern (4) gelagert ist, wobei n zumindest zwei ist und zumindest eines der zumindest zwei Lager (4) ein Gleitlager ist, und
- zumindest einen Sensor (5) mittels welchem eine Schwingung der Welle (3) in radialer Richtung erfassbar ist,
**gekennzeichnet durch**
- zumindest eine Dämpfungseinheit (6), mittels welcher auf die Welle (3) in radialer Richtung maximal eine Dämpfungskraft ausübbar ist, welche betragsmäßig kleiner ist als die Läufergewichtskraft geteilt **durch** die Anzahl n,
wobei die zumindest eine Dämpfungseinheit (6) einen drehfest mit der Welle (3) verbundenen Rotor (7) mit einem Rotorblechpaket sowie einen Stator (8) mit elektrischen Statorwicklungen (9) aufweist,
wobei das Rotorblechpaket und die Statorwicklungen (9) derart angeordnet sind und die Statorwicklungen (9) derart mit elektrischem Strom beaufschlagbar sind, dass die vom zumindest einen Sensor (5) erfasste Schwingung der Welle (3) dämpfbar ist.

2. Elektrische Maschine nach Anspruch 1,
wobei die Dämpfungskraft in eine Richtung weist, welche im Wesentlichen antiparallel zur Richtung einer im Betrieb der Welle (3) vollzogenen Auslenkung der Welle ist.

3. Elektrische Maschine nach einem der vorhergehenden Ansprüche,
wobei die Welle (3) im Betrieb einer Eigenschwingung (10) mit einer Wellenlänge λ (11) unterworfen ist,
wobei der zumindest eine Sensor (5) und/oder die zumindest eine Dämpfungseinheit (6) jeweils innerhalb eines Bereichs von ± λ/6 um die axiale Position eines Schwingungsbauchs (12) der Eigenschwingung angeordnet ist.

4. Elektrische Maschine nach Anspruch 3,
wobei die Welle (3) im Betrieb einer weiteren Eigenschwingung mit einer Wellenlänge λ' unterworfen ist,
wobei der zumindest eine Sensor (5) und/oder die zumindest eine Dämpfungseinheit (6) jeweils innerhalb eines Bereichs von ± λ'/6 um die axiale Position eines weiteren Schwingungsbauchs der weiteren Eigenschwingung (10) angeordnet ist.

5. Elektrische Maschine nach Anspruch 3 oder 4,
wobei zwischen dem zumindest einen Sensor (5) und der zumindest einen Dämpfungseinheit (6) ein Abstand in axialer Richtung von einem Mehrfachen der halben Wellenlänge λ vorgesehen ist.

6. Elektrische Maschine nach einem der Ansprüche 1-4,
wobei der zumindest eine Sensor (5) in jenem axialen Bereich der elektrischen Maschine angeordnet ist, in welchem die zumindest eine Dämpfungseinheit (6) angeordnet ist.

7. Elektrische Maschine nach einem der vorhergehenden Ansprüche,
wobei der zumindest eine Sensor (5) und/oder die zumindest eine Dämpfungseinheit (6) im axialen Bereich zwischen den zumindest zwei Lagern (4) angeordnet ist.

8. Elektrische Maschine nach einem der vorhergehenden Ansprüche,
wobei der Stator (8) der Dämpfungseinheit (6) einen Innendurchmesser von mindestens 100 mm aufweist,
wobei die elektrische Maschine mit einer derartigen Drehzahl betreibbar ist, dass die Umfangsgeschwindigkeit der Welle (3) im axialen Bereich des Gleitlagers mindestens 80 m/s beträgt.

9. Elektrische Maschine nach einem der vorhergehenden Ansprüche,
wobei die Resultierende der Dämpfungskraft im zeitlichen Mittel betragsmäßig maximal ein Prozent der Läufergewichtskraft beträgt.

10. Elektrische Maschine nach einem der vorhergehenden Ansprüche,
wobei die maximal ausübbare Dämpfungskraft betragsmäßig zumindest eine Größenordnung kleiner als die Läufergewichtskraft ist.

11. System umfassend
- eine elektrische Maschine nach einem der vorhergehenden Ansprüche,
- einen Umrichter (13), mittels welchem die Statorwicklungen (9) der zumindest einen Dämpfungseinheit (6) mit elektrischem Strom beaufschlagbar sind, und
- eine Steuerungseinheit (14), welche mit dem zumindest einen Sensor (5) verbindbar ist und mittels welcher der Umrichter (13) derart ansteuerbar ist, dass die Statorwicklungen (9) der zumindest einen Dämpfungseinheit (6) derart vom Umrichter (13) mit elektrischem Strom beaufschlagbar sind, dass die vom zumindest einen Sensor (5) erfasste Schwingung der Welle (3) dämpfbar ist.

12. System nach Anspruch 11,
wobei die Steuerungseinheit (14) einen Regelkreis aufweist, welchem Signale des zumindest einen Sensors (5) als Eingangsgröße zuführbar sind und mittels welchem an den Umrichter (13) übermittelbare Steuerbefehle als Ausgangsgröße berechenbar sind.

13. System nach Anspruch 11 oder 12 umfassend
- eine Arbeitsmaschine, welche eine Arbeitswelle (23) mit einer Arbeitswellengewichtskraft aufweist, wobei die Arbeitswelle über eine Kupplung (21) drehfest mit der Welle (3) der elektrischen Maschine verbunden ist und drehbar mittels einer Anzahl n' von Arbeitswellenlagern (24) gelagert ist,
- zumindest einen weiteren Sensor (25) zur Erfassung einer Schwingung der Arbeitswelle (23) in radialer Richtung und
- zumindest eine weitere Dämpfungseinheit (26), mittels welcher auf die Arbeitswelle (23) in radialer Richtung maximal eine weitere Dämpfungskraft ausübbar ist, welche betragsmäßig kleiner ist als die Arbeitswellengewichtskraft geteilt durch die Anzahl n',
wobei die zumindest eine weitere Dämpfungseinheit (26) einen drehfest mit der Arbeitswelle (23) verbundenen weiteren Rotor mit einem weiteren Rotorblechpaket sowie einen weiteren Stator mit weiteren elektrischen Statorwicklungen aufweist, wobei das weitere Rotorblechpaket und die weiteren Statorwicklungen derart angeordnet sind und die weiteren Statorwicklungen derart mit elektrischem Strom beaufschlagbar sind, dass die vom zumindest einen weiteren Sensor (25) erfasste Schwingung der Arbeitswelle (23) dämpfbar ist.

14. Verfahren zum Betrieb einer elektrischen Maschine nach einem der Ansprüche 1-10 und/oder eines Systems nach einem der Ansprüche 11-13 mit folgenden Verfahrensschritten:
- Erfassen einer Schwingung der Welle (3) mittels des zumindest einen Sensors (5),
- Beaufschlagen der Statorwicklungen (9) mit einem derartigen elektrischem Strom, dass die vom zumindest einen Sensor (5) erfasste Schwingung der Welle (3) gedämpft wird.
